# EUROPÄISCHE PATENTSCHRIFT

(11) **EP 1 090 453 B1**
(45) Veröffentlichungstag und Bekanntmachung des Hinweises auf die Patenterteilung: **14.07.2004**
(21) Anmeldenummer: 99924706.7
(22) Anmeldetag: 27.03.1999
(51) Int. Cl.: H02J 7/24, H02P 9/30

(54) **SPANNUNGSREGLER FÜR EINEN VON EINER BRENNKRAFTMASCHINE ANTREIBBAREN GENERATOR**
VOLTAGE REGULATOR FOR A GENERATOR THAT CAN BE DRIVEN BY AN INTERNAL COMBUSTION ENGINE
REGULATEUR DE TENSION POUR GENERATEUR ACTIONNABLE PAR UN MOTEUR A COMBUSTION INTERNE

(30) Priorität: 20.06.1998 DE 19827556
(43) Veröffentlichungstag der Anmeldung: 11.04.2001
(73) Patentinhaber: ROBERT BOSCH GMBH, 70442 Stuttgart (DE)
(72) Erfinder: KOSS, Thomas, D-72766 Reutlingen (DE); FIEDLER, Gerhard, D-72666 Neckartailfingen (DE); NASSWETTER, Günter, D-72810 Gomaringen (DE); SUELZLE, Helmut, D-71691 Freiberg (DE)
(86) Internationale Anmeldenummer: PCT/DE1999/000933
(87) Internationale Veröffentlichungsnummer: WO 1999/067870

(56) Entgegenhaltungen:
- EP-A- 0 421 332
- EP-A- 0 611 215
- EP-A- 0 690 540
- EP-A- 0 751 602
- EP-A- 0 802 464
- EP-A- 0 872 950
- DE-A- 4 321 970

## Beschreibung

Die Erfindung betrifft einen Spannungsregler für einen von einer Brennkraftmaschine antreibbaren Generator nach dem Oberbegriff des Anspruchs 1.

### Stand der Technik

Es ist bekannt, daß bei Zuschaltung von starken elektrischen Verbrauchern in einem Kraftfahrzeugbordnetz der Generator stark belastet wird. Da die Zuschaltung eines solchen elektrischen Verbrauchers zu einem Spannungseinbruch führt, versucht der Spannungsregler durch Erhöhung des Erregerstromes die vom Generator abgegebene Leistung zu steigern und die Ausgangsspannung des Generators im Wesentlichen konstant zu halten. Durch diese Vorgehensweise wird das vom Generator verursachte bremsende Moment, das letztendlich auf die Kurbelwelle der Brennkraftmaschine wirkt, erhöht, so daß bei kleinen Drehzahlen der Brennkraftmaschine, insbesondere im Leerlauf, ein Drehzahleinbruch auftreten kann.

Damit ein solcher Drehzahleinbruch beim Zuschalten von starken elektrischen Verbrauchern möglichst klein gehalten wird, werden bei Spannungsreglern für Generatoren in Kraftfahrzeugen Maßnahmen getroffen, die unter dem Begriff "load-response" bekannt sind.

Bei Spannungsreglern mit "load-response Funktion" wird der Erregerstrom nach dem Zuschalten eines starken Verbrauchers nicht schlagartig, sondern kontinuierlich erhöht. Zur Erkennung der Lastzuschaltung wird beispielsweise die Einschaltdauer des Regeltransistors ausgewertet. Ein Spannungsregler für einen von einer Brennkraftmaschine angetriebenen Generator, der eine "load-response Funktion" sowie eine Auswertung des Erregerstrom - Tastverhältnisses aufweist, ist beispielsweise aus der DE-OS 196 38 357 bekannt.

Ein anderer Spannungsregler für einen von einer Brennkraftmaschine angetriebenen Generator, der ebenfalls eine Begrenzung des Anstiegs des Erregerstromes nach einer Lastzuschaltung aufweist, ist aus der europäischen Patentanmeldung 0 496 185 A1 bekannt. Bei diesem bekannten Spannungsregler wird sowohl der Istwert der Generatorausgangsspannung als auch der Istwert des Erregerstromes erfaßt. In Abhängigkeit von diesen beiden erfaßten Werten findet eine Spannungsregelung statt, die zum einen den Anstieg des Erregerstromes nach Zuschaltung einer elektrischen Last innerhalb vorgebbarer Grenzen hält und zum anderen diese Grenzen verschiebt, sofern der Istwert der Ausgangsspannung des Generators zu stark abfällt.

Die beiden bekannten Lösungen haben den Nachteil, daß bei dem aus der DE-OS 196 38 357 bekannten Spannungsregler die Reaktion erst nach einer bestimmten Zeit erfolgt und zwar erst dann, wenn der Stromanstieg bereits stattgefunden hat, während bei dem aus der EP 0 496 185 A1 bekannten Spannungsregler zusätzliche Mittel benötigt werden, die den Erregerstrom erfassen, wobei diese Mittel einen beträchtlichen Schaltungsaufwand für die erforderliche Genauigkeit benötigen.

Aus der EP 0 802 464 A 1 ist ein Spannungsregler bekannt, der im Regelkreis für den Erregerstrom eines von einer Brennkraftmaschine angetriebenen Generators liegt und einen digitalen Pulsweitenmodulator aufweist. Dieser Pulsweitenmodulator regelt das Pulsweitenverhältnis des Erregerstromes, indem die mit der Erregerwicklung in Verbindung stehende Transistorleistungsstufe des Spannungsreglers mittels eines pulsweitenmodulierten Signals beeinflusst wird. Damit wird die Ausgangsspannung des Generators abhängig von der erfassten Ausgangsspannung geregelt. Zusätzliche Mittel zum Bedämpfen des Systems verhindern zu schnelle Änderungen und verbessern die Stabilität bei der Regelung. Der bekannte Spannungsregler weist Mittel zur Erfassung der Ausgangsspannung des Generators auf, deren Ausgangssignale bei der Regelung berücksichtigt werden.

### Vorteile der Erfindung

Der erfindungsgemäße Spannungsregler für einen von einer Brennkraftmaschine antreibbaren Generator mit den Merkmalen des Anspruchs 1 hat den Vorteil, daß die Begrenzung der Erregerstromanstiegs-Geschwindigkeit nach Zuschalten eines starken elektrischen Verbrauchers sofort erfolgt, ohne daß aufwendige Mittel zur Messung des Erregerstromes benötigt werden. Erzielt werden diese Vorteile, indem bei einem Spannungsregler mit der Merkmalskombination des Oberbegriffes des Anspruchs 1 der Regelkreis für den Erregerstrom so ausgestaltet ist, daß er ein System mit einem digitalen Pulsweitenmodulator umfaßt, der das Pulsweitenverhältnis abhängig von der erfaßten Ausgangsspannung des Generators regelt, wobei dieser Regelung zusätzlich eine Bedämpfung überlagert ist, die ein übergeordnetes Abschalten einer Periode des vom Pulsweitenmodulator gelieferten Signales bewirkt.

Durch einen solchen Spannungsregler wird eine Regelung der Ausgangsspannung des Generators erzielt, die eine hohe Stabilität aufweist und zu einer geregelten Spannung mit sehr geringer Restwelligkeit führt. Die sogenannte "loadresponse", also die Reaktion auf eine Lastzuschaltung kann in besonders vorteilhafter Weise ausgeregelt werden, die es sogar ermöglicht, daß die Erregerstrom-Anstiegsrate auf beliebige Werte reduziert werden kann. Erzielt werden diese weiteren Vorteile der Erfindung durch die in den Unteransprüchen aufgeführten Maßnahmen.

### Zeichnung

Ein Ausführungsbeispiel der Erfindung ist in der Zeichnung dargestellt und wird in der nachfolgenden Beschreibung näher erläutert. Im einzelnen zeigt Fig. 1 ein Blockschaltbild einer erfindungsgemäßen Schaltungsanordnung. Fig. 2 zeigt Tastverhältnisse der Pulsweitenmodulation und in Fig. 3 ist der für die Ausgangsspannung des Generators erhaltene Spannungsverlauf beispielhaft für zwei verschiedene Tastverhältnisse der Pulsweitenmodulation dargestellt.

### Beschreibung

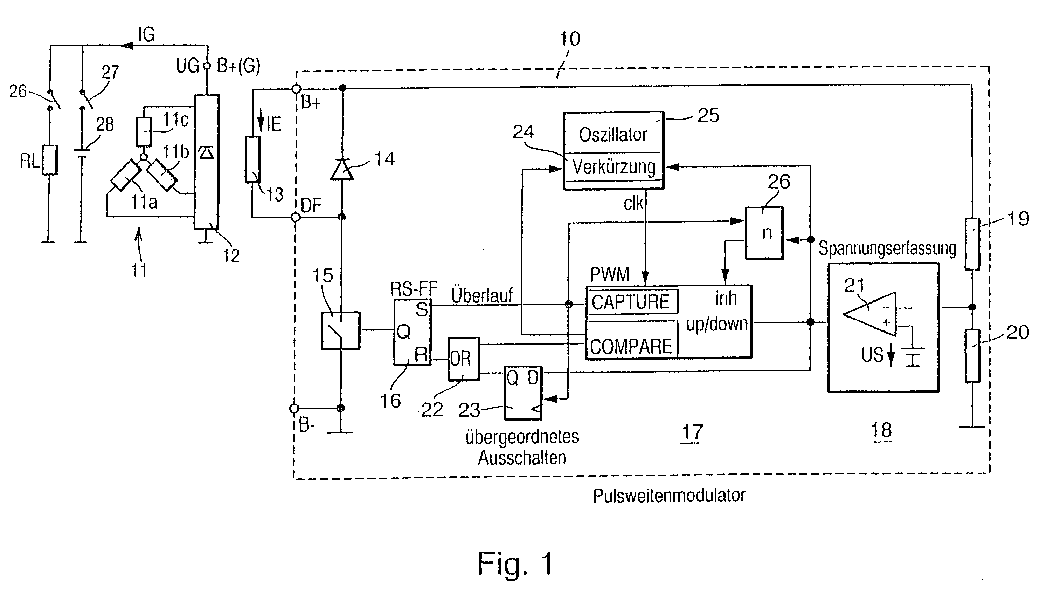

In Fig. 1 ist ein Ausführungsbeispiel der Erfindung dargestellt. Dabei bezeichnet 10 einen Spannungsregler, der die Ausgangsspannung UG des Generators 11, die im Gleichrichter 12 gleichgerichtet wird, regelt. Die Ausgangsspannung UG des Generators 11 wird an der Generatorklemme B+ abgenommen. Der Spannungsregler 10 umfaßt die Anschlüsse B+, DF, sowie B-, wobei B- auf Masse liegt. an die Anschlüsse B+ und DF ist die Erregerwicklung 13 des Generators angeschlossen, durch die Erregerwicklung 13 fließt der Erregerstrom IE. Parallel zur Erregerwicklung 13 liegt eine Freilaufdiode 14, die beim Abschalten der induktiven Last der Erregerwicklung 13 den induzierten Freilaufstrom aufnimmt.

Die Ansteuerung der Erregerwicklung 13 bzw. die Regelung des Erregerstromes IE durch die Erregerwicklung 13 erfolgt mit Hilfe der Transistorleistungsendstufe 15. Die Transistorleistungsendstufe 15 verbindet dabei im eingeschalteten Zustand den Anschluß DF mit dem Anschluß B-, es fließt dann ein Erregerstrom IE über die Erregerwicklung 13 nach Masse, wodurch in bekannter Weise ein Magnetfeld erzeugt wird, das in den Generatorwicklungen 11a, 11b, 11c eine Spannung induziert, die letztendlich zur Ausgangsspannung UG des Generators gleichgerichtet wird. Die Ansteuerung der Transistorendstufe 15 erfolgt mit Hilfe logischer Bauelemente, wobei der Q-Ausgang eines RS-Flipflops 16 die Transistorendstufe 15 ansteuert. Die Ansteuerlogik selbst umfaßt einen Pulsweitenmodulator 17, der der Transistorendstufe 15 ein pulsweitenmoduliertes Ansteuersignal zuführt sowie eine Istwerterfassung 18, die im Folgenden näher beschrieben werden.

Die Istwerterfassung 18 ist eine Spannungserfassung, die mit dem Spannungsteiler mit den Widerständen 19, 20 in Verbindung steht, der zwischen dem Regleranschluß B+ und Masse liegt. Die Istwerterfassung 18 umfaßt wenigstens einen Komparator 21, dessen invertierender Eingang mit dem Spannungsteiler 19, 20 in Verbindung steht und an dessen nicht invertierendem Eingang ein Spannnungsschwellwert US anliegt. Mit dieser Istwerterfassung 18 läßt sich eine genaue Spannungserfassung durchführen, die für die Regelung der Generatorausgangsspannung UG benötigt wird. Als Ausgangssignal der Spannungserfassung entsteht ein up/down Signal, das high ist, wenn die Ausgangsspannung UG des Generators 11 kleiner ist als US und low ist, falls UG größer als US ist.

Das in der Istwerterfassung 18 ermittelte Ausgangssignal wird dem Pulsweitenmodulator 17 zugeführt. Der Pulsweitenmodulator 17 ist wie folgt aufgebaut: Einem up/down-Eingang wird das der Istspannung UIst des Generators entsprechende Signal zugeführt. Ein Startausgang capture führt auf den set-Eingang S des RS-Flipflops 16. Ein Ausgang compare führt über ein Oder-Gatter 22 auf den Reset-Eingang R des RS-Flipflops 16. Der capture-Startausgang führt außerdem auf ein D-Flipflop 23, dessen Ausgang mit dem anderen Eingang des Oder-Gatters 22 verbunden ist.

Der Ausgang compare des Pulsweitenmodulators 17 führt weiterhin noch auf einen Block 24, zur Verkürzung der Periodendauer der Bestandteil des Oszillators 25 ist und clock-Impulse clk an den Pulsweitenmodulator liefert. Dem Block 24 wird außerdem die Ist-Spannung UIst zugeführt. Einem weiteren Block 26 wird die Ist-Spannung sowie das am capture-Ausgang des Pulsweitenmodulators entstehende Signal zugeführt. Der Block 26 bewirkt ein Verhindern des Hochzählens, sofern ein up-Signal anliegt. Der Block 26 ist mit einem Eingang inh des Pulsweitenmodulators 17 verbunden. Die Funktionsweise der gesamten Anordnung wird im Folgenden beschrieben.

Die Ausgangsspannung des Generators UG, die eine Funktion des Erregerstromes IE und des Lastwiderstandes RL ist, wird über den Erregerstrom IE in der Erregerwicklung 13 geregelt. Dazu wird bekanntermaßen der Endstufentransistor 15 angesteuert. Zur Reduzierung der verlustleistung im Endstufentransistor findet die Stromregelung nicht linear sondern getaktet statt. Der Lastwiderstand RL ist stellvertretend für das Bordnetz dargestellt, er kann über den Schalter 26 zugeschaltet werden. Die Batterie 28 wird vom Generator 11 bei geschlossenem Schalter 27 geladen und sichert die Stromversorgung, wenn der Generator keinen ausreichenden Strom abgeben kann. Bei dem in Fig. 1 dargestellten Ausführungsbeispiel der Erfindung besteht der Regelkreis, der den Endstufentransistor 15 ansteuert, aus einem digitalen Pulsweitenmodulator 17, der von einem up/down-Signal gesteuert wird. Dieses up/down-Signal wird ausgehend vom Istwert der Generatorausgangsspannung gebildet. Der Istwert der Generatorspannung wird dabei mit Hilfe der Istwerterfassung 18 ermittelt.

In der Istwerterfassung 18 bzw. in einem Komparator 21 der Istwerterfassung 18 wird die Generatorausgangsspannung mit einem Sollwert US verglichen. Beim Ausführungsbeispiel nach Fig. 1 liegt der Sollwert US am nichtinvertierenden Eingang des Komparators 21, der Istwert wird dem invertierenden Eingang des Komparators 21 zugeführt. Am Ausgang des Komparators 21 wird ein up/down-Signal erzeugt, wobei bei Unterschreiten des Sollwertes ein up-Signal erzeugt wird und sofern die Generatorausgangsspannung UG den Sollwert überschreitet, wird ein down-Signal an den Pulsweitenmodulator 17 weitergegeben. Bei anliegen eines up-Signales am up/down-Eingang des Pulsweitenmodulators 17 wird in jeder Periode des Tastsignals des Pulsweitenmodulators das Tastverhältnis um eine Stufe erhöht. Bei Anliegen eines down-Signales wird entsprechend das Tastverhältnis des Pulsweitenmodulators um eine Stufe verringert.

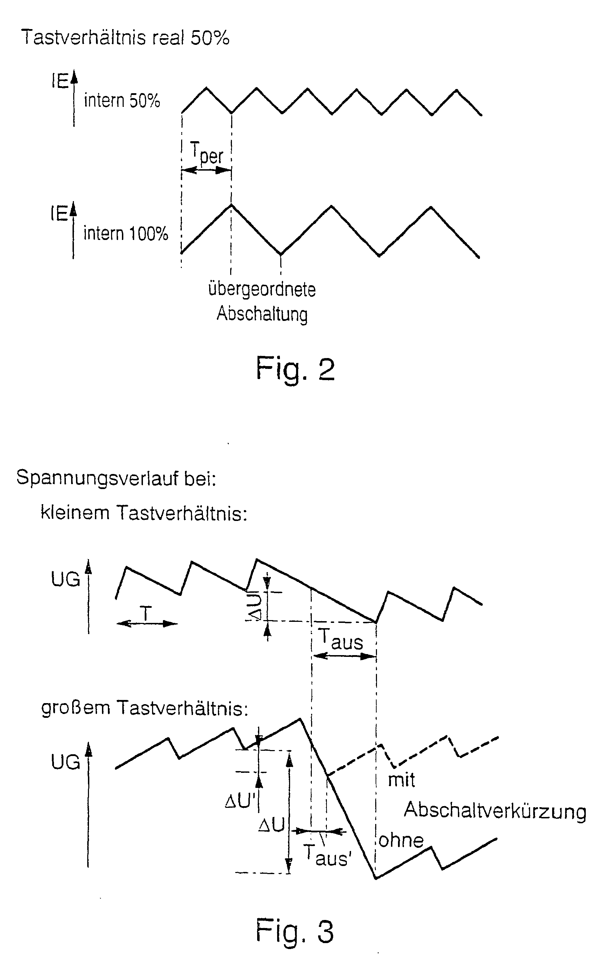

Um zu verhindern, daß die Ausgangsspannung UG des Generators 11 um den Sollwert herum schwingt, wird das Regelsystem so stark bedämpft, daß bei Überschreiten des Sollwertes und am up/down-Eingang des Pulsweitenmodulators demzufolge bei Anliegen eines down-Signales die folgende Periode des Pulsweitenmodulators übergeordnet abgeschaltet wird. Damit wird ein Überschwingen vermieden. Durch diese übergeordnete Abschaltung existiert für den Regelkreis ein weiterer stabiler Zustand, in welchem sich das interne Tastverhältnis des Pulsweitenmodulators und das externe Tastverhältnis, das an der Endstufe anliegt, stark unterscheiden. In Fig. 2 sind für ein reales Tastverhältnis von 50 % interne Tastverhältnisse des Pulsweitenmodulators für 50 % und 100 % dargestellt, die übergeordnete Abschaltung erfolgt zum Zeitpunkt ÜA, die Periodendauer ist Tper.

Damit dieser Zustand nach Fig. 2 vermieden werden kann, wird nach dem Übergang von down nach up (anliegendes down-Signal ändert sich in anliegendes up-Signal) für n Perioden die Erhöhung des Tastverhältnisses verhindert, was dazu führt, daß sich das Tastverhältnis des Pulsweitenmodulators 17 dem am Endstufentransistor real erforderlichen Tastverhältnis schnell bis auf eine verbleibende Unschärfe annähert. Die Größe der verbleibenden Unschärfe ist abhängig von der Zahl n. Die verbleibende Unschärfe kann somit durch Wahl der Zahl n an erforderliche Bedingungen angepaßt werden. Die Hochzählverhinderung bei Anliegen eines up-Signales wird von Block 26 durch Abgabe eines entsprechenden Signales an den inh-Eingang des Pulsweitenmodulators durchgeführt, sie gilt für n Perioden.

Durch das übergeordnete Abschalten einer ganzen Periode des Tastverhältnisses des Pulsweitenmodulators ergibt sich eine Änderung des Erregerstromes IE und somit der Ausgangsspannung UG des.Generators, die stark vom aktuellen mittleren Tastverhältnis abhängt. Zur Verringerung dieser Restwelligkeit wird die übergeordnet abgeschaltete Periode in ihrer Dauer so an das Tastverhältnis angepaßt, daß sich. eine Spannungsänderung, die unabhängig vom Tastverhältnis ist, ergibt. Dieser Sachverhalt ist in Fig. 3 dargestellt, wobei der Spannungsverlauf bei kleinem Tastverhältnis und bei großem Tastverhältnis dargestellt ist. Bei großem Tastverhältnis ist der Spannungsverlauf mit Abschaltverkürzung gestrichelt dargestellt. Taus bezeichnet die Zeitspanne, während der die übergeordnete Abschaltung der Periodendauer wirkt, ΔU bzw. ΔU' ist die sich einstellende Spannungsdifferenz.

Da das interne Tastverhältnis TPWM des Pulsweitenmodulators 17 nahezu identisch ist mit dem real erforderlichen Tastverhältnis TEND an der Endstufe, das zum Erreichen der Sollausgangsspannung des Generators erforderlich ist, kann eine erfolgte Lastzuschaltung, die zu einem Absinken des Ist-Wertes der Spannung führt, nur noch in dem Maße ausgeregelt werden, wie es die Änderungsrate des Pulsweitenmodulators zuläßt. Wird die Änderungsrate des Pulsweitenmodulators so festgelegt, daß nur noch jede m-te Periode bei Anliegen eines up-Signales zu einer Tastverhältniserhöhung führt, läßt sich die Anstiegsrate des Erregerstromes begrenzen und im Prinzip beliebig reduzieren. Durch Vorgabe der Zahl m läßt sich eine wählbare Stromanstiegsrate festlegen.

Die erfindungsgemäße Ausgestaltung des Spannungsreglers 10 läßt sich als integrierter Schaltkreis aufbauen.

## Patentansprüche

1. Spannungsregler für einen von einer Brennkraftmaschine antreibbaren Generator, zur Regelung einer Bordnetzspannung für elektrische Verbraucher in Kraftfahrzeugen, der die Ausgangsspannung des Generators durch Beeinflussung des über eine Erregerwicklung fließenden Erregerstromes so regelt, daß der beim Zuschalten von Verbrauchern ausgelöste Anstieg des Erregerstromes auf vorgebbare Werte begrenzt wird, wobei der Regelkreis für den Erregerstrom ein System mit einem digitalen Pulsweitenmodulator umfaßt, der das Pulsweitenverhältnis des Erregerstromes durch Ansteuerung der Tansistorleistungsendstufe mittels eines pulsweitenmodulierten Signales abhängig von der erfaßten Ausgangsspannung des Generators regelt, und daß zusätzlich Mittel zum Bedämpfen des Systems vorhanden sind, **dadurch gekennzeichnet, daß** die Mittel zum Bedämpfen des Systems so mit dem Pulsweitenmodulator zusammenwirken, daß wenigstens eine Periode des ausgegebenen pulsweitenmodulierten Signales unterdrückt wird.

2. Spannungsregler nach Anspruch 1 **dadurch gekennzeichnet, daß** die Dauer der unterdrückten oder abgeschalteten Periode des pulsweitenmodulierten Signales variabel ist und die Abschaltung übergeordnet erfolgt.

3. Spannungsregler nach Anspruch 2 **dadurch gekennzeichnet, daß** die Dauer der übergeordnet abgeschalteten Periode an das Tastverhältnis des Pulsweitenmodulators angepaßt wird.

4. Spannungsregler nach einem der vorhergehenden Ansprüche **dadurch gekennzeichnet, daß** die Istwerterfassung der Ausgangsspannung des Generators mit Hilfe eines Komparators erfolgt, der die über einen Spannungsteiler zugeführte Generatorspannung UG mit einem Sollwert US vergleicht und ein Ausgangssignal liefert, das als up/down-Signal im Pulsweitenmodulator 17 ausgewertet wird, wobei im Pulsweitenmodulator bei Anliegen eines up-Signales in jeder Periode das Tastverhältnis um eine Stufe erhöht wird und bei Anliegen eines down-Signales das Tastverhältnis um eine Stufe verringert wird.

5. Spannungsregler nach Anspruch 4, **dadurch gekennzeichnet, daß** bei überschreiten des Sollwertes und demzufolge Anliegen eines down-Signales am Pulsweitenmodulator die folgende Periode des dem Endstufentransistor zugeführten Signales abgeschaltet wird.

6. Spannungsregler nach einem der vorhergehenden Ansprüche, **dadurch gekennzeichnet, daß** das übergeordnete Ausschalten einer Periode des pulsweitenmodulierten Signales mit Hilfe wenigstens eines D-Flipflops (23) und eines Oder-Gatters (22) realisiert wird.

## Claims

1. Voltage regulator for a generator which can be driven by an internal combustion engine, for regulating a vehicle on-board power system voltage for electrical loads in motor vehicles, which regulates the output voltage of the generator by influencing the field current which flows across a field winding, in such a way that the rise in the field current which is triggered when loads are connected into the circuit is limited to predefinable values, the regulator circuit for the field current comprising a system with a digital pulse-width modulator which regulates the pulse-width ratio of the field current by actuating the transistor power output stage by means of a pulse-width-modulated signal as a function of the sensed output voltage of the generator, and in that, in addition, means for damping the system are provided, **characterized in that** the means for damping the system interact with the pulse-width modulator in such a way that at least one period of the output pulse-width-modulated signal is suppressed.

2. Voltage regulator according to Claim 1, **characterized in that** the duration of the suppressed or switched-off period of the pulse-width-modulated signal is variable and the switching off operation takes place in a superordinate fashion.

3. Voltage regulator according to Claim 2, **characterized in that** the duration of the period which is switched off in a superordinate fashion is adapted to the pulse duty factor of the pulse-width modulator.

4. Voltage regulator according to one of the preceding claims, **characterized in that** the actual value sensing of the output voltage of the generator is carried out using a comparator which compares the generator voltage UG fed via a voltage divider with a setpoint value US and supplies an output signal which is evaluated as an up/down signal in the pulse-width modulator 17, in which case, when an up signal is present in each period the pulse duty factor is increased by one increment, and when a down signal is present the pulse duty factor is decreased by one increment in the pulse width modulator.

5. Voltage regulator according to Claim 4, **characterized in that** when the setpoint value is exceeded and a down signal is consequently present at the pulse width modulator, the following period of the signal which is fed to the output stage transistor is switched off.

6. Voltage regulator according to one of the preceding claims, **characterized in that** the superordinate switching off of a period of the pulse-width-modulated signal is implemented using at least one D flip-flop (23) and an OR gate (22).

## Revendications

1. Régulateur de tension pour un générateur pouvant être actionné par un moteur à combustion interne, permettant la régulation d'une tension de bord pour des consommateurs électriques dans des véhicules automobiles, qui régule la tension de sortie du générateur en influençant le courant d'excitation passant par une bobine d'excitation de telle sorte que l'augmentation du courant d'excitation déclenchée lors du fonctionnement de consommateurs est limitée à des valeurs pouvant être prédéterminées, le circuit de régulation pour le courant d'excitation comprenant un système doté d'un modulateur de largeur d'impulsion numérique, qui régule le rapport de largeur d'impulsion du courant d'excitation par une commande du niveau de puissance du transistor au moyen d'un signal modulé en largeur d'impulsion en fonction de la tension de sortie enregistrée du générateur, des moyens d'atténuation du système étant en outre disponibles,
**caractérisé en ce que**
les moyens d'atténuation du système coopèrent avec le modulateur de largeur d'impulsion de telle sorte qu'au moins une période du signal modulé en largeur d'impulsion émis est bloquée.

2. Régulateur de tension selon la revendication 1,
**caractérisé en ce que**
la durée de la période bloquée ou coupée du signal modulé en largeur d'impulsion est variable et la coupure s'effectue en amont.

3. Régulateur de tension selon la revendication 2,
**caractérisé en ce que**
la durée de la période coupée en amont est adaptée au facteur d'utilisation d'impulsions du modulateur de largeur d'impulsion.

4. Régulateur de tension selon l'une des revendications précédentes,
**caractérisé en ce que**
l'enregistrement de la valeur réelle de la tension de sortie du générateur s'effectue à l'aide d'un comparateur, qui compare la tension du générateur UG fournie par le biais d'un diviseur de tension avec une valeur de consigne US et qui émet un signal de sortie, qui est exploité en tant que signal plus/moins dans le modulateur de largeur d'impulsion 17, le facteur d'utilisation d'impulsions étant augmenté d'un niveau dans le modulateur de largeur d'impulsion lors de l'application d'un signal plus dans chaque période et étant diminué d'un niveau lors de l'application d'un signal moins.

5. Régulateur de tension selon la revendication 4,
**caractérisé en ce que**
lorsque l'on dépasse la valeur de consigne et que l'on applique en conséquence un signal moins au niveau du modulateur de largeur d'impulsion, la période du signal envoyé au transistor de niveau final est coupée.

6. Régulateur de tension selon l'une des revendications précédentes,
**caractérisé en ce que**
la coupure en amont d'une période du signal modulé en largeur d'impulsion est réalisée à l'aide d'au moins une bascule D (23) ou une porte OU (22).
